# EUROPEAN PATENT SPECIFICATION

(11) **EP 3 773 072 B1**
(45) Date of publication and mention of the grant of the patent: **20.07.2022**
(21) Application number: 19723498.2
(22) Date of filing: 09.04.2019
(51) Int. Cl.: A47B 77/02, F16B 45/00, A47B 57/16, F16B 12/02, E04B 2/74

(54) **HOOK MEMBER FOR MODULAR FURNITURE**
HAKENELEMENT FÜR MODULARES MÖBEL
ÉLÉMENT CROCHET POUR MEUBLE MODULAIRE

(30) Priority: 13.04.2018 IT 201800004460
(43) Date of publication of application: 17.02.2021
(73) Proprietor: Moretti & C. 2 s.r.l., 61026 Lunano (IT)
(72) Inventor: MORETTI, Gisfredo, 61026 Lunano (IT)
(74) Representative: Cipriani, Guido
(86) International application number: PCT/IB2019/052917
(87) International publication number: WO 2019/197990

(56) References cited:
- WO-A1-2004/049882
- WO-A1-2018/041910
- DE-A1- 19 503 814
- FR-A1- 2 664 950
- US-A- 2 187 441

## Description

### Technical Field

The present invention relates to a hook member for modular furniture, in particular for free-standing kitchens, paneled walls, especially for living rooms.

### Background Art

The patent application WO 2018/041910 describes a free-standing modular kitchen unit. The kitchen supports itself on the floor without the need for fixing either to the back wall, to the ceiling or to the floor. The kitchen unit includes a base and a multiplicity of uprights and panels. The uprights are in the form of sections having at least one front wing provided with slots, and the panels have hook members to be inserted into the slots for the assembly of the panels on the uprights.

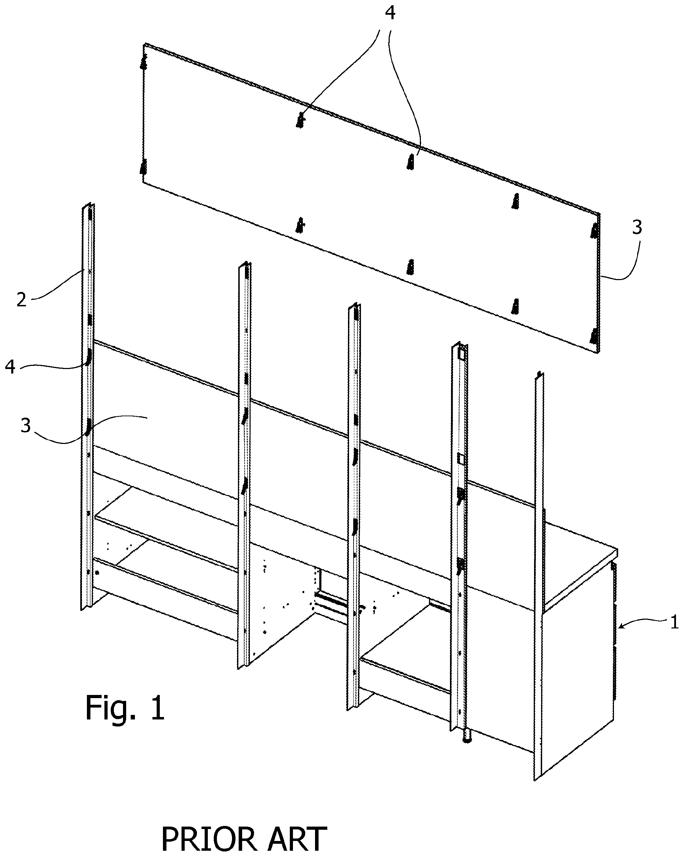

By way of reference, the aforementioned prior art is shown in more detail in Figure 1 which is a rear axonometric view of the free-standing modular kitchen unit in an assembly step.

The assembly of the kitchen unit is performed starting from the base 1 and the multiplicity of uprights 2 which are fixed to the base 1. Above the base 1 a pair of panels 3 is mounted on the multiplicity of uprights 2 by means of hook members 4.

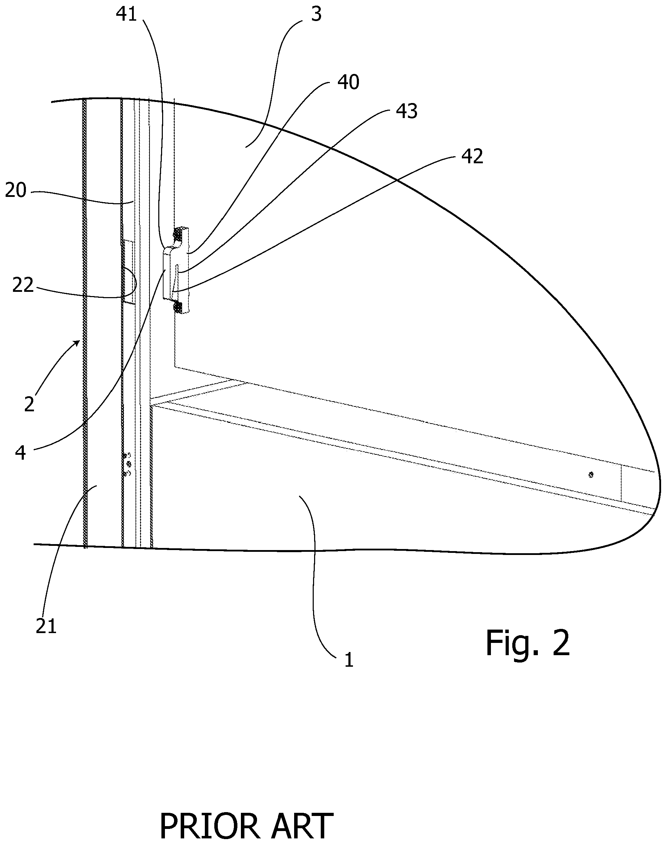

In Figure 2, which is an axonometric view showing an enlarged detail in Figure 1, the panel 3 is approached to the upright 2, which, like the hook member 4, is shown in greater detail.

The upright 2 has an angular shape with a front wing 20 facing the panel 3 and a side wing 21, orthogonal to the wing 20, and therefore also to the panel 3. In the wing 20 there are slots 22 for the engagement with the hook member 4.

The hook member 4 has a vertical section 40, intended to be fixed to the panel 3, and a section 41, substantially parallel to the vertical section 40, from which it is spaced with an inner bevel 42 and a slit 43. The inner bevel 42 is shaped as an invitation for insertion of the section 41 of the hook member 4 in the slot 22 of the upright 2. The insertion is completed when the slit 43 between the vertical section 40 and the parallel section 41 of the hook member 4 is inserted on the lower edge of the slot 22 of the upright 2.

Given the plurality of the hook members 4 and the large dimensions of the panel 3, the assembly of the panel 3 on the uprights 2 can cause some difficulties for the installers. They must provide for the simultaneous insertion of the parallel section 41 of all the hook members 4 in the respective slots 22 and achieve that all the parallel sections 41 lower identically in the corresponding slots 22, in order to avoid a horizontal misalignment of the panels 3. This simultaneous insertion may cause the installer's fingers to fit between an upright 2 and a hook member 4, and may cause misalignment between the panels with consequent aesthetic defects in the kitchen once assembled.

US 2,187,441 discloses a hook member having a vertical section with a front side provided with fastening means to fasten the hook member to a panel, and an inclined section connected to the vertical section according to an acute angle in a joining part on the opposite side to the panel, so that an upwardly tapered space is delimited by the vertical section and by the inclined section and forms a mouth of the hook member. The inclined section has a nearly horizontal portion terminating with a free end. A spring tongue normally closes the mouth of the hook member. A similar hook member is described in FR 3 664 950 and WO 2004/049882 A1.

### Summary of the Invention

An object of the present invention is to provide a hook member that can be used in a free-standing modular kitchen such as the one partially described above, but also in other modular furniture, such as paneled walls, especially for living rooms to improve the installation procedure and to improve the result.

In particular, an object of the invention is to facilitate the simultaneous insertion of the hook members in the uprights, also reducing the risk of physical damage to the installers.

Another object of the invention is to allow a regulated and adaptable assembly of the panels or of other members on which the hook members are engaged with respect to the uprights.

The aforementioned objects are achieved by a hook member for modular furniture, having
- a vertical section with a front side provided with fastening means to fasten the hook member to a panel or similar component of a modular piece of furniture, and
- an inclined section connected to the vertical section according to an acute angle in a joining part on the opposite side to the panel or similar,
- an upwardly tapered space delimited by the vertical section and the inclined section, and
- an elastic counteracting element provided in the upwardly tapered space.

A slit is in said joining part between the vertical section and the inclined section, and the inclined section is lightened in a lightening portion thereof facing the vertical section and has an abutment base; and
the elastic counteracting element is constituted by a blade, having an upper end trapped in the slit and a lower end resting on the abutment base of the inclined section, the blade facing the lightening portion of the inclined section.

The elastic deformation of the blade creates a contrasting force on the panel to keep it perfectly upright and aligned with the other panels or components of the same modular furniture.

### Brief Description of Drawings

Further characteristics and advantages of the present invention will become most clear from the indicative, and therefore non-limiting, description of a preferred embodiment of a hook member, as illustrated in the accompanying drawings, in which:
- Figure 1 is a rear axonometric view of a free-standing modular kitchen unit of the prior art in an assembly phase;
- Figure 2 is an axonometric view showing an enlarged detail in Figure 1;
- Figure 3 is an axonometric view of a variant of a hook member according to the prior art;
- Figures 4 and 5 are a side view and a rear view, respectively, of the hook member in Figure 3;
- Figure 6 is an axonometric view of an embodiment of a hook member according to the present invention;
- Figures 7 and 8 are a side view and a rear view on a slightly reduced scale, respectively, of the hook member in Figure 6;
- Figure 9 is an exploded side view on a slightly reduced scale of the hook member in Figure 6;
- Figures 10 to 12 are partial axonometric views of successive mounting steps of mounting a panel to the uprights by means of the hook member according to the invention; and
- Figures 13 to 15 are partial cross-section views of successive mounting steps for mounting a panel to the uprights by means of the hook member according to the invention.

### Description of an Embodiment of the Invention

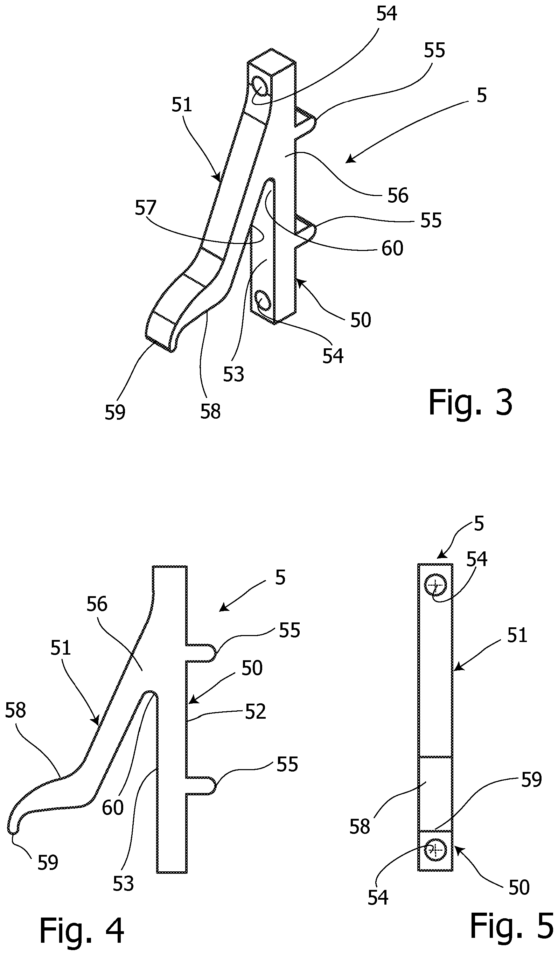

First reference is made to Figures 3 to 5 which are an axonometric view, a side view and a rear view, respectively, of a variant of a hook member for modular furniture according to the prior art. The hook member, indicated as 5, has a vertical section 50 and an inclined section 51 so as to form an acute angle between the two sections. The vertical section 50, which is shaped like a square-shaped parallelepiped, has a front side 52 intended to be facing the panel or similar component of a modular piece of furniture, as shown in the following figures, and a rear side 53. The vertical section 50 is equipped with fixing means to fix the hook member to the panel or similar; this fixing means comprises two transverse holes 54 made in the vertical section 50 and a pair of ridges, generally indicated as 55, projecting from the front side 52 of the vertical section 50. The ridges 55 are of a parallelepiped shape with a rounded free end. However, the ridges could also be cylindrical pins.

The inclined section 51, having a cross-section similar to that of the vertical section 50, is connected to the vertical section 50 in a joining part 56 so as to form together an upwardly tapered space 57, which is delimited by the vertical section 50 and the inclined section 51. The inclined section 51 has a portion 58 slightly inclined downwardly with respect to the inclined section 51, i.e. substantially horizontal, which ends with a free end 59, substantially vertical.

It is understood that the upwardly tapered space 57 has the shape of a wedge with a rounded top vertex 60.

The free end 59 of the nearly horizontal portion 58, which is in the form of a comma, is narrow and facing parallel to the vertical section 50.

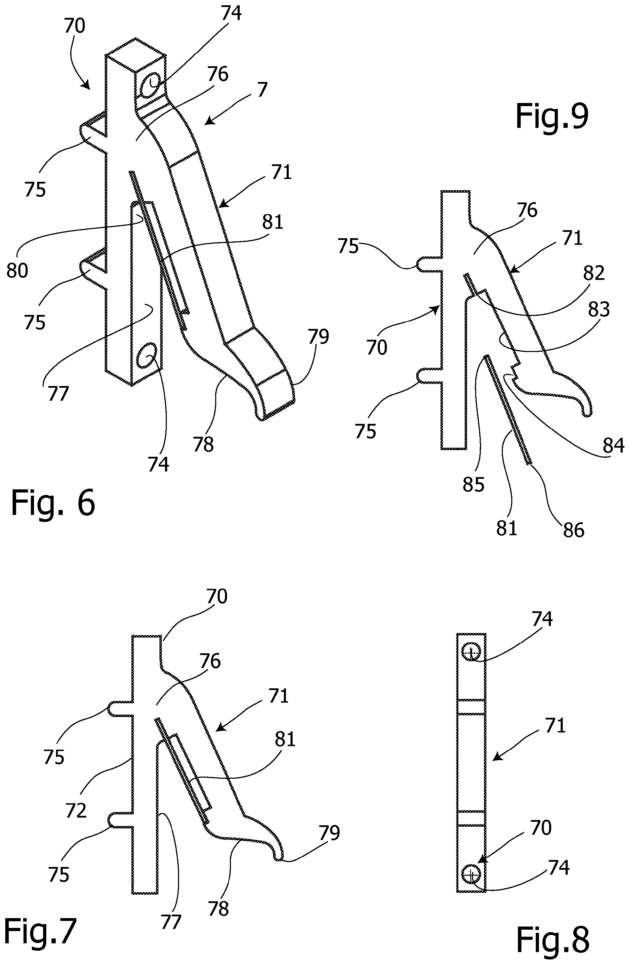

Reference is made now to Figures 6 to 9 which are an axonometric view, a side view, a rear view and an exploded side view of an embodiment of a hook member according to the present invention.

The hook member, indicated as 7, has a vertical section 70 and an inclined section 71 so as to form an acute angle between the two sections. Like in the variant of the prior art in

Figures 3 to 5, the vertical section 70 is provided with two transverse holes 74 and a pair of ridges, generally indicated as 75, projecting from the front side 72 of the vertical section 70. The inclined section 71 is connected to the vertical section 70 in a joining part 76 so as to form an upwardly tapered space 77 which is delimited by the vertical section 70 and the inclined section 71. The inclined section 71 has an almost horizontal portion 78, i.e. substantially slightly inclined downward, terminating with a free end 79.

Analogously to the variant of the prior art in Figures 3 to 5, the upwardly tapered space 77 is shaped like a wedge with a rounded top vertex 80.

The free end 79 of the nearly horizontal portion 78, which is in the form of a comma, is narrow and facing parallel to the vertical section 70.

According to the embodiment of the invention, an elastic counteracting element is provided in the upwardly tapered space 77. In fact, referring in particular to Figure 9, a slit 82 is made in the joining part 76 between the vertical section 70 and the inclined section 71. The inclined section 71 is lightened in a lightening portion 83 thereof facing the vertical section 70. Next to the lightening portion 83 there is provided an abutment base 84 for the elastic counteracting element.

The elastic counteracting element is preferably a blade 81 made of spring steel. It has an upper end 85 imprisoned in the slit 82, and a lower end 86 resting on the abutment plate 84. The blade 81 is situated, therefore, facing the lightening portion 83 of the inclined section 71. The upper end 85 is trapped in the joining part 76 by plastic deformation of the latter.

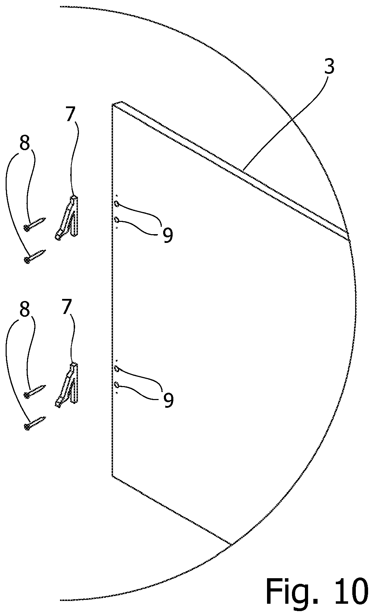

Reference is made now to Figures 10 to 12, which are partial axonometric views of successive mounting steps for mounting a panel to the uprights by the hook member 7 according to the invention.

Figure 10 shows a panel 3 and two hook members 7 according to the invention. The hook members 7 are shown distant from the panel 3, and screws 8 are ready to be inserted into the holes 74, shown in the previous figures, for fixing the hook members 7 on the panel 3. Holes 9 are made in the panel 3 in correspondence of pins not shown, acting as centering means, like the ridges 75 of the hook members 7.

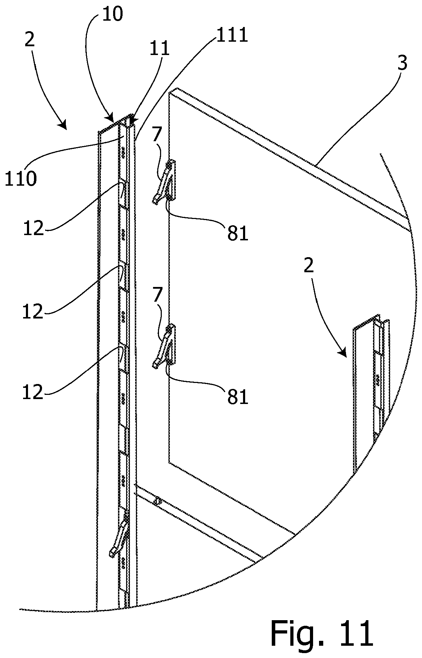

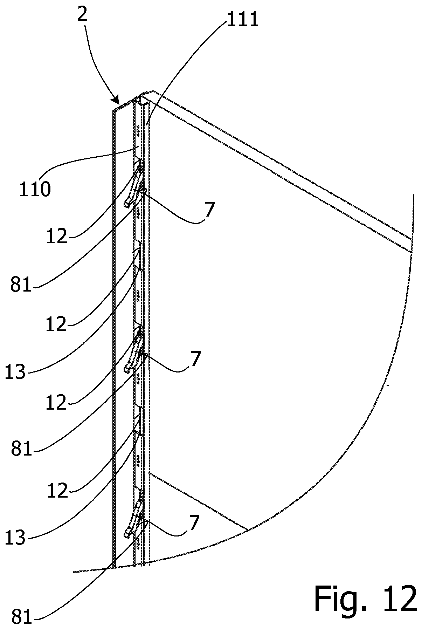

In Figure 11 the panel 3 with the hook members 7 is shown approaching the upright 2. The upright 2 has a core 10 and an L-shaped wing 11. The L-shaped wing 11 has a first side 110 orthogonal to the core 10 and a second side 111 parallel to the core 10. The first side 110 of the wing 11 has slots 12 sized so that the hook elements 7 can be inserted therein, as shown in Figure 12. The blade 81 rests on the lower edge 13 of the slots 12. The size of the wing 11, in particular of its first side 110, is such that, when the hook elements 7 are completely inserted into the slots 12, the blade 81, being deformed towards the inclined section 71 of the hook member 7, keeps the panel 3 against the free end of the second side 111 of the wing 11.

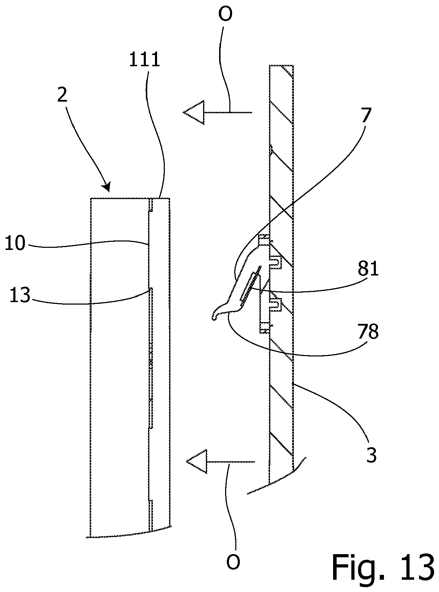

For better understanding reference is now made to Figures 13 to 15 which are partial cross-section views of successive mounting steps for mounting a panel to the uprights by means of the hook member according to the invention.

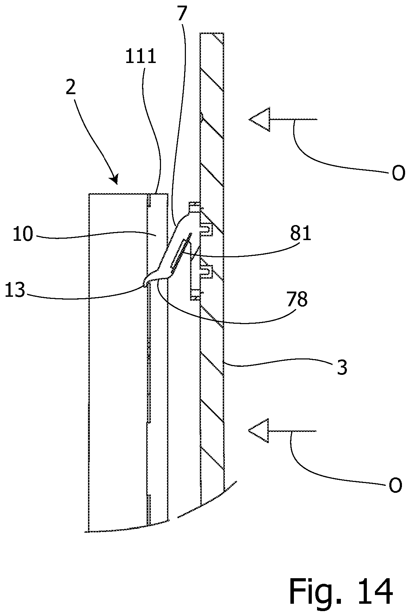

The same numbers are used in these figures to indicate parts similar to those of Figures 10 to 12. Figure 13 shows the panel 3 equipped with hook members 7 in horizontal approach to the upright 2, as indicated by the arrows O. In Figure 14 the nearly horizontal portion 78 is shown resting on the lower edge 13 of the slot 12. Obviously, also the other hook members of the panel 3 are positioned, even if not shown, on the lower edge 13 of their slots 12. The further approach of the panel 3 to the upright 2 causes the portion 78 to slide and lower itself according to the arrows V of the panel 3.

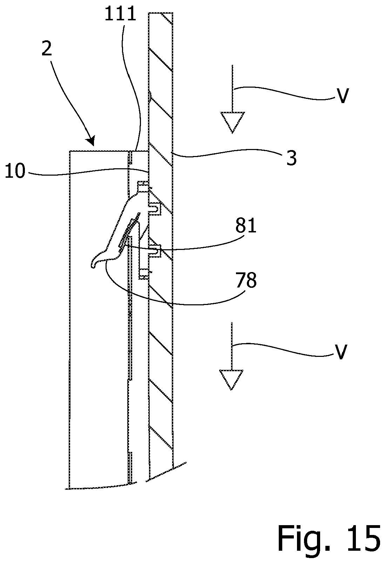

As shown in particular in Figure 15, the hook member 7 rests with the blade 81 on the lower edge 13 of the slot 12. The elastic deformation of the blade 81 creates a counteracting force on the panel 3 to keep it perfectly abutted to the second side 111 of the wing 11 and aligned with the other panels or components of the same modular furniture.

## Claims

1. A hook member (7) for modular furniture, having
- a vertical section (70) with a front side (72) provided with fastening means to fasten the hook member to a panel (3) or similar component of a modular piece of furniture, and
- an inclined section (71) connected to the vertical section (70) according to an acute angle by a joining part (76) on the opposite side to the panel (3) or similar,
- an upwardly tapered space (77) delimited by the vertical section (70) and the inclined section (71), **characterised by**
- an elastic counteracting element provided in the upwardly tapered space (77), and
a slit (82) is in said joining part (76) between the vertical section (70) and the inclined section (71), and the inclined section (71) is lightened in a lightening portion (83) thereof facing the vertical section (70) and has an abutment base (84); and
the elastic counteracting element is constituted by a blade (81), having an upper end (85) trapped in the slit (82) and a lower end (86) resting on the abutment base (84) of the inclined section (71), the blade (81) facing the lightening portion (83) of the inclined section (71).

2. The hook member (7) according to claim 1, wherein the blade (81) is made of spring steel.

3. The hook member (7) according to claim 1, wherein the inclined section (71) has a nearly horizontal portion (78) terminating with a free end (79).

4. The hook member (7) according to claim 1, wherein said upwardly tapered space (77) has the shape of a wedge with a rounded upper vertex (80).

5. The hook member (7) according to claim 3, wherein the free end (79) of the nearly horizontal portion (78) is narrow and facing the vertical section (70).

6. The hook member (7) according to claim 1, wherein said fastening means comprises two transverse holes (74) made in the vertical section (70) for inserting screws (8).

7. The hook member (7) according to claim 1, wherein said fastening means further comprises at least one pair of ridges (75) projecting from the front side (72) of the vertical section (70), to be inserted into the panel (3).

## Patentansprüche

1. Hakenelement (7) für modulare Möbel, aufweisend
- ein vertikales Teilstück (70) mit einer Vorderseite (72), die mit Befestigungsmitteln versehen ist, um das Hakenelement an einer Platte (3) oder einer ähnlichen Komponente eines modularen Möbelstücks zu befestigen, und
- ein geneigtes Teilstück (71), das mit dem vertikalen Teilstück (70) in einem spitzen Winkel durch einen Zusammenfügungssteil (76) auf der gegenüberliegenden Seite der Platte (3) oder dergleichen verbunden ist,
- einen sich nach oben verjüngenden Raum (77), der durch das vertikale Teilstück (70) und das geneigte Teilstück (71) begrenzt wird, **dadurch gekennzeichnet, dass**
- ein elastisches entgegenwirkendes Element in dem sich nach oben verjüngenden Raum (77) vorgesehen ist, und
ein Schlitz (82) in dem Zusammenfügungssteil (76) zwischen dem vertikalen Teilstück (70) und dem geneigten Teilstück (71) liegt, und das geneigte Teilstück (71) in einem Erleichterungsabschnitt (83) davon, der dem vertikalen Teilstück (70) zugewandt ist, erleichtert ist und eine Anschlagbasis (84) aufweist; und
das elastische entgegenwirkende Element durch eine Klinge (81) gebildet ist, die ein oberes Ende (85), das in dem Schlitz (82) gefangen ist, und ein unteres Ende (86) aufweist, das auf der Anschlagbasis (84) des geneigten Teilstücks (71) aufliegt, wobei die Klinge (81) dem Erleichterungsabschnitt (83) des geneigten Teilstücks (71) zugewandt ist.

2. Hakenelement (7) nach Anspruch 1, wobei die Klinge (81) aus Federstahl hergestellt ist.

3. Hakenelement (7) nach Anspruch 1, wobei das geneigte Teilstück (71) einen nahezu horizontalen Abschnitt (78) aufweist, der mit einem freien Ende (79) endet.

4. Hakenelement (7) nach Anspruch 1, wobei der sich nach oben verjüngende Raum (77) die Form eines Keils mit einem abgerundeten oberen Scheitelpunkt (80) aufweist.

5. Hakenelement (7) nach Anspruch 3, wobei das freie Ende (79) des nahezu horizontalen Abschnitts (78) schmal ist und dem vertikalen Teilstück (70) zugewandt ist.

6. Hakenelement (7) nach Anspruch 1, wobei die Befestigungsmittel zwei Querlöcher (74) umfassen, die im vertikalen Teilstück (70) zum Einsetzen von Schrauben (8) ausgebildet sind.

7. Hakenelement (7) nach Anspruch 1, wobei die Befestigungsmittel ferner mindestens ein Paar von Rippen (75) umfassen, die von der Vorderseite (72) des vertikalen Teilstücks (70) vorstehen, um in die Platte (3) eingeführt zu werden.

## Revendications

1. Élément à crochet (7) pour meubles modulaires, comportant
- une section verticale (70) dotée d'une face avant (72) pourvue de moyens de fixation pour fixer l'élément à crochet à un panneau (3) ou à un composant similaire d'un meuble modulaire, et
- une section inclinée (71) reliée à la section verticale (70) selon un angle aigu par une partie de jonction (76) sur le côté opposé au panneau (3) ou similaire,
- un espace conique vers le haut (77) délimité par la section verticale (70) et la section inclinée (71), **caractérisé par**
- un élément élastique antagoniste prévu dans l'espace conique vers le haut (77), et
une fente (82) se trouve dans ladite partie de jonction (76) entre la section verticale (70) et la section inclinée (71), et la section inclinée (71) est allégée dans une partie d'allègement (83) de celle-ci faisant face à la section verticale (70) et comporte une base de butée (84) ; et
l'élément élastique antagoniste est constitué par une lame (81), comportant une extrémité supérieure (85) emprisonnée dans la fente (82) et une extrémité inférieure (86) reposant sur la base de butée (84) de la section inclinée (71), la lame (81) faisant face à la partie d'allègement (83) de la section inclinée (71).

2. Élément à crochet (7) selon la revendication 1, dans lequel la lame (81) est réalisée en acier à ressort.

3. Élément à crochet (7) selon la revendication 1, dans lequel la section inclinée (71) comporte une partie presque horizontale (78) se terminant par une extrémité libre (79).

4. Élément à crochet (7) selon la revendication 1, dans lequel ledit espace conique vers le haut (77) a la forme d'un coin avec un sommet supérieur arrondi (80).

5. Élément à crochet (7) selon la revendication 3, dans lequel l'extrémité libre (79) de la partie presque horizontale (78) est étroite et fait face à la section verticale (70).

6. Élément à crochet (7) selon la revendication 1, dans lequel lesdits moyens de fixation comprennent deux trous transversaux (74) réalisés dans la section verticale (70) pour introduire des vis (8).

7. Élément à crochet (7) selon la revendication 1, dans lequel lesdits moyens de fixation comprennent de plus au moins une paire de protubérances (75) faisant saillie à partir du côté avant (72) de la section verticale (70), pour être introduites dans le panneau (3).
